(19) Europäisches Patentamt
European Patent Office
Office européen des brevets

(11) **EP 2 181 864 B1**

(12) **EUROPEAN PATENT SPECIFICATION**

(45) Date of publication and mention
of the grant of the patent:
**18.05.2011 Bulletin 2011/20**

(51) Int Cl.:
***B60C 11/04*** *(2006.01)*

(21) Application number: **09009429.3**

(22) Date of filing: **21.07.2009**

(54) **Pneumatic tire for motorcycle**

Luftreifen für ein Motorrad

Pneu pour motocyclette

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.11.2008 JP 2008283259**
**04.11.2008 JP 2008283368**

(43) Date of publication of application:
**05.05.2010 Bulletin 2010/18**

(73) Proprietor: **Sumitomo Rubber Industries, Ltd.**
**Hyogo-ken (JP)**

(72) Inventor: **Otani, Masafumi**
**Hyogo 651-0072 (JP)**

(74) Representative: **Manitz, Finsterwald & Partner GbR**
**Postfach 31 02 20**
**80102 München (DE)**

(56) References cited:
**EP-A- 1 004 460      EP-A- 1 800 906**
**WO-A-2008/149611    JP-A- 2003 276 404**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a pneumatic tire to be attached to a motorcycle of the type shown by JP-A-2003-276404. In more detail, the present invention relates to an improvement in a tread of a tire.

Description of the Related Art

In cornering of a motorcycle, a centrifugal force acts on the motorcycle. For the cornering, it is necessary to apply a cornering force. The cornering force is balanced with the centrifugal force. In the cornering, a rider tilts the motorcycle inward. By the tilt, the cornering of the motorcycle is achieved. In order to easily carry out the cornering, a tire for the motorcycle includes a tread having a small radius of curvature. In straight running, a center region of the tread comes in contact with a ground. On the other hand, in the cornering, a shoulder region comes in contact with the ground. A tire considering respective roles of the center region and the shoulder region has been described in Japanese Laid-Open Patent Publication No. 2005-271760 and Japanese Laid-Open Patent Publication No. 2008-143327.

In the tire described in the Japanese Laid-Open Patent Publication No. 2005-271760, a crosslinked rubber in a center region of a tread has a higher hardness than a crosslinked rubber in a shoulder region. Consequently, the tire has an excellent handling stability in straight running and has an excellent grip performance in cornering.

In a front tire described in the Japanese Laid-Open Patent Publication No. 2008-143327, a crosslinked rubber in a center region of a tread is set to have a lower hardness than a crosslinked rubber in a shoulder region. In straight running, the center region having a low hardness in the tread comes in contact with a ground. Consequently, the tire is excellent in a disturbance absorption in the straight running. In cornering, the shoulder region having a high hardness in the tread comes in contact with the ground. Consequently, a great camber thrust is generated. The tire has an excellent cornering performance. In the tire, a disturbance absorbing performance and a cornering performance in the straight running are compatible with each other.

In general, a groove is formed on a tread surface of a tire for a motorcycle. By the groove, a tread pattern is formed. The tread pattern contributes to an enhancement in a draining property of the tire, an improvement in a braking performance, a reduction in a noise and the like. Moreover, the tread pattern contributes to a fine sight of the tire.

Referring to a tire in which a crosslinked rubber in a region positioned on a center side is different from a crosslinked rubber positioned on a tread end side, a difference is made in an amount of wear of a groove between the regions. In some cases, the groove is formed from the region positioned on the center side of the tread to the region positioned on the tread end side. In the groove, a difference is easily made in the amount of wear of the groove between the regions. In a groove portion on a boundary between the region positioned on the center side and the region positioned on the tread end side, particularly, partial wear is apt to occur. When the difference in the amount of wear of the groove is made or the partial wear occurs, a performance of the tire is apt to be reduced. Moreover, a fine sight of the tire is damaged.

It is an object of the present invention to provide a tire for a motorcycle which is excellent in straight running and cornering performances and is excellent in a wear resistance of a tread.

SUMMARY OF THE INVENTION

A tire for a motorcycle according to the present invention includes a tread divided into a plurality of regions in an axial direction. The tread has a region positioned on a center and at least one region positioned on an outside of the region in the axial direction. A rubber hardness H(n+1) of an (n+1)th region from the center is different from a rubber hardness Hn of an n-th region from the center when n is a natural number. The tread includes a groove. The groove has a wall surface. A minimum value of a tilt angle of the wall surface in the (n+1)th region from the center is different from that of the tilt angle in the n-th region from the center. A minimum value of a tilt angle of a wall surface in a region having a low rubber hardness is greater than that of a tilt angle of a wall surface in a region having a high rubber hardness.

In a preferred tire, the rubber hardness H(n+1) of the (n+1)th region from the center is lower than the rubber hardness Hn of the n-th region from the center. The minimum value of the tilt angle of the wall surface in the (n+1)th region from the center is greater than that of the tilt angle in the n-th region from the center.

In the tire, it is preferable that the tread should include a groove provided across the (n+1)th region from the center and the n-th region from the center.

It is preferable that the tread of the tire should have a groove provided from the region positioned on the center to a region positioned on a most tread end side. A rubber hardness of each of the regions present from the center to the tread end is lower than that of an adjacent region to the center side. A minimum value of a tilt angle of the same region is greater than that of the adjacent region to the center side.

In the tire, it is preferable that the (n+1) th region from the center should have a central portion positioned on a center in an axial direction of the region. A tilt angle δ (n+1) of a wall surface of a groove in the central portion has a constant value. The n-th region from the center has a central portion positioned on a center in the axial direction of the same region. A tilt angle δ (n) of a wall surface of a groove in the central portion has a constant value. The tilt angle δ (n+1) is greater than the tilt angle δ (n). The tilt angle of the wall surface is gradually increased from the tilt angle δ (n) to the tilt angle δ (n+1) between the central portion of the n-th region from the center and the central portion of the (n+1) th region from the center.

In the tire, it is preferable that a ratio (WCn / WTn) of a width WCn of the central portion in the n-th region from the center to a width WTn in the axial direction of the same region should be equal to or higher than 0.5 and be equal to or lower than 0.75. In the tire, it is preferable that the tilt angles δn and δ (n+1) and the rubber hardnesses Hn and H (n+1) should satisfy the following expression.

$$1 \leqq ((\delta(n+1) - \delta n) \ / \ (Hn - H(n+1))) \leqq 3$$

It is preferable that the tread surface of the tire should have an early reaching portion and a late reaching portion along the groove. The early reaching portion is constituted to come in contact with a road surface earlier than the late reaching portion in a circumferential direction when a normal rotation is carried out. The groove has a pair of wall surfaces. The tilt angle is determined on any of the wall surfaces which is linked to the early reaching portion. It is preferable that the tire should be attached to a rear wheel of a motorcycle.

In another preferred tire, the rubber hardness H (n+1) of the (n+1) th region from the center is higher than the rubber hardness Hn of the n-th region from the center. The minimum value of the tilt angle of the wall surface in the n-th region from the center is greater than that of the tilt angle in the (n+1) th region from the center.

In the tire, it is preferable that the tread should include a groove provided across the (n+1) th region from the center and the n-th region from the center.

It is preferable that the tread of the tire should have a groove provided from the region positioned on the center to a region positioned on a most tread end side. A rubber hardness of each of the regions present from the center to the tread end is lower than that of an adjacent region to the tread end side. A minimum value of a tilt angle of the same region is greater than that of the adjacent region to the tread end side.

In the tire, it is preferable that the (n+1) th region from the center should have a central portion positioned on a center in an axial direction of the same region. A tilt angle δ (n+1) of a wall surface of a groove in the central portion has a constant value. The n-th region from the center has a central portion positioned on a center in the axial direction of the same region. A tilt angle δ (n) of a wall surface of a groove in the central portion has a constant value. The tilt angle δ (n) is greater than the tilt angle δ (n+1). The tilt angle of the wall surface is gradually increased from the tilt angle δ (n+1) to the tilt angle δ (n) between the central portion of the (n+1) th region from the center and the central portion of the n-th region from the center.

In the tire, it is preferable that a ratio (WCn / WTn) of a width WCn of the central portion in the n-th region from the center to a width WTn in the axial direction of the same region should be equal to or higher than 0.5 and be equal to or lower than 0.75. In the tire, it is preferable that the tilt angles δn and δ (n+1) and the rubber hardnesses Hn and H (n+1) should satisfy the following expression.

$$1 \leqq (\delta n - (\delta(n+1)) \ / \ (H(n+1) - Hn)) \leqq 3$$

It is preferable that the tread surface of the tire should have an early reaching portion and a late reaching portion along the groove. The early reaching portion is constituted to come in contact with a road surface earlier than the late reaching portion in a circumferential direction when a normal rotation is carried out. The groove has a pair of wall surfaces. The tilt angle is determined on any of the wall surfaces which is linked to the late reaching portion. It is preferable that the tire should be attached to a front wheel of a motorcycle.

When the motorcycle carries out a transition from straight running to cornering, a contact surface of the tread of the tire gradually performs a transition from the region positioned on the center side to the region positioned on the tread end side. In the tire, the regions are constituted by materials which are suitable for respective roles. The tire is excellent in straight running and cornering performances. In the tire, the tilt angle of the wall surface of the groove is set to be a predetermined angle. Consequently, it is possible to prevent a difference in an amount of wear of the groove from being increased between regions formed by different materials. Referring to the tire, it is possible to prevent a performance of the tire from being deteriorated due to the wear. Moreover, it is possible to prevent a fine sight of the tread from being damaged.

BRIEF DESCRIPTION OF THE DRAWINGS

Fig. 1 is a sectional view showing a tire according to an embodiment of the present invention,
Fig. 2 is a partial projection view showing a tread surface of the tire in Fig. 1,
Fig. 3 is a partial enlarged view showing the tire in Fig. 2,
Fig. 4 is a sectional view taken along a line IV - IV in Fig. 3,
Fig. 5 is a sectional view taken along a line V - V in Fig. 3,
Fig. 6 is a sectional view showing a tire according to another embodiment of the present invention,
Fig. 7 is a partial projection view showing a tread surface of the tire in Fig. 6,
Fig. 8 is a partial enlarged view showing the tire in Fig. 7,
Fig. 9 is a sectional view taken along a line IX - IX in Fig. 8, and
Fig. 10 is a sectional view taken along a line X - X in Fig. 8.

DESCRIPTION OF THE PREFERRED EMBODIMENTS

The present invention will be described below in detail based on preferred embodiments with reference to the drawings.

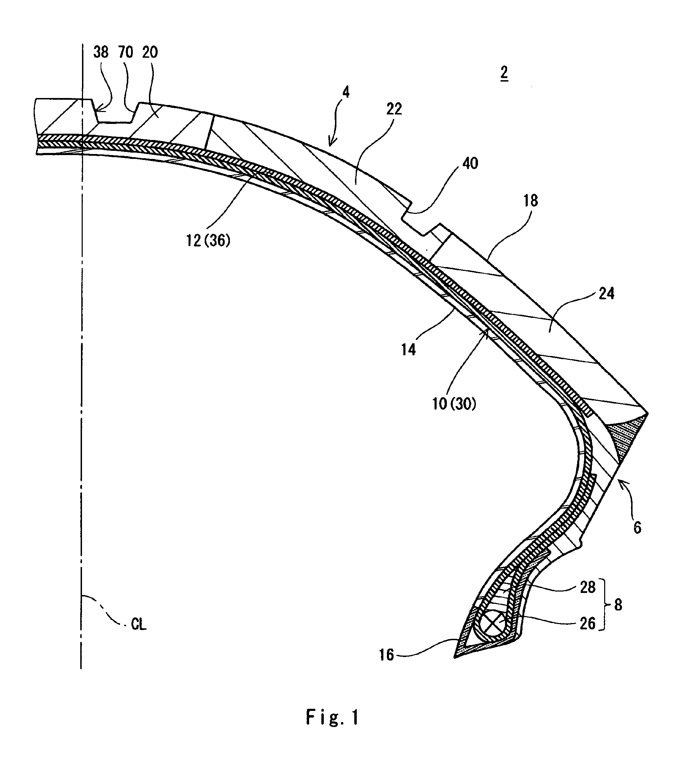

In Fig. 1, a vertical direction is set to be a radial direction and a transverse direction is set to be an axial direction. A one-dotted chain line CL represents an equator plane. A tire 2 includes a tread 4, a pair of sidewalls 6, a pair of beads 8, a carcass 10, a belt 12, an inner liner 14 and a pair of chafers 16. The tire 2 is a pneumatic tire of a tubeless type. The tire 2 is attached to a motorcycle.
The tread 4 takes an outward convex shape in the radial direction. The tread 4 has a tread surface 18 to come in contact with a road surface. The tread 4 is divided into five parts. The tread 4 includes a first region 20, a pair of second regions 22 and a pair of third regions 24. The first region 20 is positioned on a center in the axial direction of the tread 4. The second region 22 is positioned on a tread end side adj acently to the first region 20. The third region 24 is positioned on the tread end side adjacently to the second region 22. The second regions 22 make a pair which is symmetrical with respect to the equator plane CL of the tire 2. The third regions 24 make a pair which is symmetrical with respect to the equator plane CL of the tire 2. The first region 20, the second region 22 and the third region 24 are formed by crosslinked rubber compositions, respectively. Materials of the regions 20, 22 and 24 are different from each other. In the tire 2, a rubber hardness of the first region 20 is higher than that of the second region 22. The rubber hardness of the second region 22 is higher than that of the third region 24.
The sidewall 6 is extended almost inward in the radial direction from an end of the tread 4. The sidewall 6 is formed by a crosslinked rubber composition. The sidewall 6 absorbs a shock from the road surface by a flexure. Furthermore, the sidewall 6 prevents an external damage of the carcass 10.
The bead 8 is extended almost inward in the radial direction from the sidewall 6. The bead 8 includes a core 26 and an apex 28 extended outward in the radial direction from the core 26. The apex 28 is tapered outward in the radial direction. The apex 28 is formed by a crosslinked rubber composition. The apex 28 has a high hardness.
The carcass 10 is formed by a carcass ply 30. The carcass ply 30 is extended along internal surfaces of the tread 4 and the sidewalls 6. The carcass ply 30 is folded back from an inside to an outside in the axial direction around the core 26. The carcass ply 30 is constituted by a cord and a topping rubber, which is not shown. The cord is constituted by an organic fiber. Examples of a preferable organic fiber include a polyester fiber, a nylon fiber, a rayon fiber, a polyethylene naphthalate fiber and an aramid fiber.
The belt 12 is positioned between the carcass 10 and the tread 4. The belt 12 is formed by a belt ply 36. The belt ply 36 is constituted by a cord and a topping rubber, which is not shown in Fig. 1. A material of the cord is steel or an organic fiber. Specific examples of the organic fiber include an aramid fiber, a nylon fiber, a polyester fiber, a rayon fiber and a polyethylene naphthalate fiber.
The inner liner 14 is bonded to an inner peripheral surface of the carcass 10. The inner liner 14 is formed by a crosslinked rubber. A rubber having an excellent air insulating property is used for the inner liner 14. The inner liner 14 plays a part in holding an internal pressure of the tire 2.

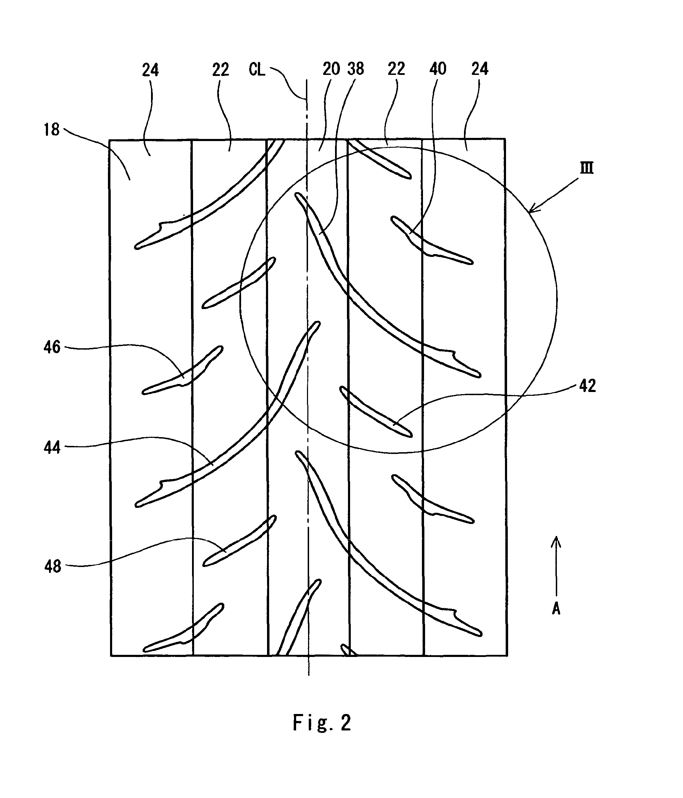

Fig. 2 illustrates a part of the tread surface 18 in the tire 2 in a projection onto a cylindrical surface. The tread 4 includes grooves 38, 40, 42, 44, 46 and 48. An arrow A indicates a direction of the tire 2 which rolls in a forward direction. The arrow A indicates a normal rotating direction of the tire 2. The grooves 38, 40, 42, 44, 46 and 48 are repetitively formed on the tread surface 18 with a phase shifted in the direction of the arrow A. The grooves 38, 40, 42, 44, 46 and 48 are extended with a tilt to a normal rotating direction of the tire 2, respectively. A shape of the groove 38 and that of the groove 44 are symmetrical with respect to the equator plane CL. A shape of the groove 40 and that of the groove 46 are symmetrical with respect to the equator plane CL. A shape of the groove 42 and that of the groove 48 are symmetrical with respect to the equator plane CL.

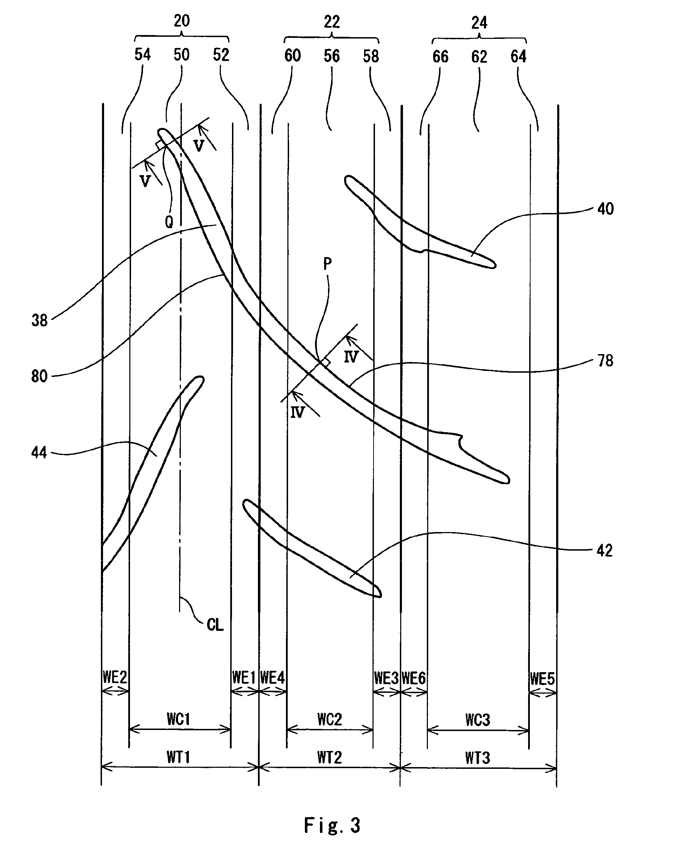

As shown in Fig. 3, the groove 38 is formed across the first region 20, the second region 22 and the third region 24. The groove 38 is formed across the first region 20 positioned on a center and the second region 22. Furthermore, the groove 38 is formed across the second region 22 and the third region 24. The groove 40 is formed across the second region 22 positioned on the center side and the third region 24 positioned on a tread end side adjacently. The groove 42 is formed across the first region 20 positioned on the center and the second region 22 positioned on the tread end side adjacently.

The first region 20 includes a central portion 50 and ends 52 and 54. The central portion 50 is positioned on a center in the axial direction of the first region 20. The end 52 is positioned on an outside in the axial direction of the central portion 50 and is linked to one of the second regions 22. The end 54 is positioned on the outside in the axial direction of the central portion 50 and is linked to the other second region 22. A double arrow WC1 indicates a width in the axial direction of the central portion 50. The width WC1 of the central portion 50 is measured along the tread surface 18. A double arrow WT1 indicates a width in the axial direction of the first region 20. The width WT1 in the axial direction is measured along the tread surface 18. A double arrow WE1 indicates a width in the axial direction of the end 52. A double arrow WE2 indicates a width in the axial direction of the end 54. The end widths WE1 and WE2 are measured along the tread surface 18. The end width WE1 is equal to the end width WE2.

The second region 22 includes a central portion 56 and ends 58 and 60. The central portion 56 is positioned on a center in the axial direction of the second region 22. The end 58 is positioned on an outside in the axial direction of the central portion 56 and is linked to the third region 24. The end 60 is positioned on the outside in the axial direction of the central portion 56 and is linked to the first region 20. A double arrow WC2 indicates a width in the axial direction of the central portion 56. The width WC2 of the central portion 56 is measured along the tread surface 18. A double arrow WT2 indicates a width in the axial direction of the second region 22. The width WT2 in the axial direction is measured along the tread surface 18. A double arrow WE3 indicates a width in the axial direction of the end 58. A double arrow WE4 indicates a width in the axial direction of the end 60. The end widths WE3 and WE4 are measured along the tread surface 18. The end width WE3 is equal to the end width WE4.

The third region 24 includes a central portion 62 and ends 64 and 66. The central portion 62 is positioned on a center in the axial direction of the third region 24. The end 64 is positioned on an end of the tread 4 at an outside in the axial direction of the central portion 62. The end 66 is positioned on the outside in the axial direction of the central portion 62 and is linked to the second region 22. A double arrow WC3 indicates a width in the axial direction of the central portion 62. The width WC3 of the central portion 62 is measured along the tread surface 18. A double arrow WT3 indicates a width in the axial direction of the third region 24. The width WT3 in the axial direction is measured along the tread surface 18. A double arrow WE5 indicates a width in the axial direction of the end 64. A double arrow WE6 indicates a width in the axial direction of the end 66. The end widths WE5 and WE6 are measured along the tread surface 18. The end width WE5 is equal to the end width WE6.

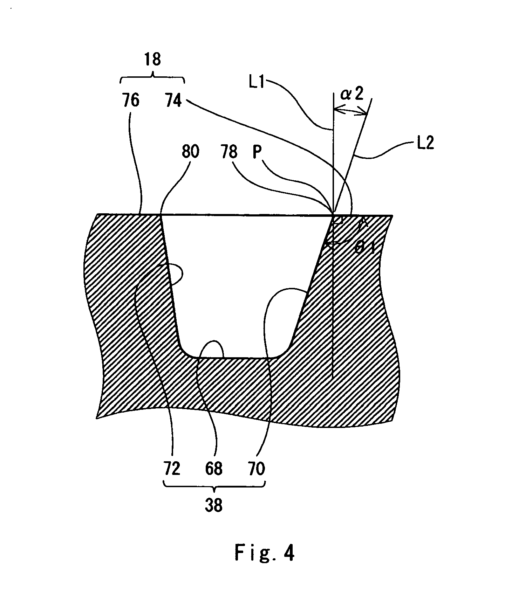

Fig. 4 shows a section of the groove 38. The groove 38 includes a bottom surface 68, a wall surface 70 and a wall surface 72. The wall surfaces 70 and 72 are extended in a longitudinal direction of the groove 38. The wall surfaces 70 and 72 are erected from the bottom surface 68 and are linked to the tread surface 18. The tread surface 18 includes an early reaching portion 74, a late reaching portion 76, and edges 78 and 80. The early reaching portion 74 is an end of the tread surface 18 extended along the groove 38. The early reaching portion 74 is linked to the wall surface 70. The edge 78 is a segment for crossing the early reaching portion 74 of the tread surface 18 and the wall surface 70. The late reaching portion 76 is an end of the tread surface 18 extended along the groove 38. The late reaching portion 76 is linked to the wall surface 72. The edge 80 is a segment for crossing the late reaching portion 76 of the tread surface 18 and the wall surface 72.

A point P indicates a point of the edge 78 in the section of Fig. 4. A line IV-IV forms a perpendicular section to the edge 78 as shown in Fig. 3. A line L1 in Fig. 4 is a perpendicular to the tread surface 18 which passes through the point P. A line L2 is an extended line of the wall surface 70 in the section of Fig. 4. An angle $\alpha 2$ in Fig. 4 is formed by the lines L1 and L2. The angle $\alpha 2$ is a tilt angle of the wall surface 70 in the groove 38. The tilt angle $\alpha 2$ of the wall surface 70 in the groove 38 is measured by setting, as a positive, a direction in which an angle $\theta 1$ between the tread surface 18 and the wall surface 70 is greater than 90 degrees and setting, as a negative, a direction in which the angle $\theta 1$ is smaller than 90 degrees. In the central portion 56, a tilt of the wall surface 70 is constant. In other words, the tilt angle $\alpha 2$ is a constant angle. The tilt angle $\alpha 2$ is measured through a section of the tread 4 which is cut out perpendicularly to the edge 78.

In the first region 20, a tilt angle $\alpha 1$ of the wall surface 70 in the central portion 50 is obtained in the same manner as the tilt angle $\alpha 2$. The tilt angle $\alpha 1$ is a constant angle. The tilt angle $\alpha 2$ of the second region 22 is greater than the tilt angle $\alpha1$ of the first region 20. In the wall surface 70 within a range of the ends 52 and 60, the tilt angle is gradually increased from the tilt angle $\alpha1$ to the tilt angle $\alpha2$ in a direction from the central portion 50 to the central portion 56.

In the third region 24, a tilt angle $\alpha3$ of the central portion 62 is obtained in the same manner as the tilt angle $\alpha2$. The tilt angle $\alpha3$ is a constant angle. The tilt angle $\alpha3$ of the third region 24 is greater than the tilt angle $\alpha2$ of the second region 22. In the wall surface 70 within a range of the ends 58 and 66, the tilt angle is gradually increased from the tilt angle $\alpha2$ to the tilt angle $\alpha3$ in a direction from the central portion 56 to the central portion 62. The tilt angles $\alpha1$, $\alpha2$ and $\alpha3$ are examples of tilt angles $\delta1$, $\delta2$ and $\delta3$ of the wall surface of the groove according to the present invention.

In the tire 2, the groove 40 is also formed in the same manner as the groove 38. The groove 40 is formed across the second region 22 and the third region 24. A tilt angle of the wall surface in the central portion 56 of the second region 22 in the groove 40 is constant. A tilt angle of the wall surface in the central portion 62 of the third region 24 in the groove 40 is constant. The tilt angle of the central portion 62 is greater than that of the central portion 56. In the wall surface within a range of the ends 58 and 66, the tilt angle is gradually increased from the tilt angle of the central portion 56 to that of the central portion 62. The tilt angle is increased in a direction from the central portion 56 to the central portion 62.

The groove 42 is formed across the first region 20 and the second region 22. A tilt angle of the wall surface in the central portion 56 of the second region 22 in the groove 42 is constant. In the wall surface within a range of the ends 52 and 60, the tilt angle is gradually increased to the tilt angle of the central portion 56. The tilt angle is gradually increased in a direction from the end 52 to the central portion 56.

Referring to the tire 2, the description has been given to the groove provided across at least two regions. However, a groove is also formed in one of the regions in the same manner. More specifically, it is assumed that the tire 2 includes one of the grooves formed in the first region 20 and the other groove formed in the second region 22. A tilt angle of the central portion 56 in the other groove is greater than that of the central portion 50 in one of the grooves. If a further groove is formed in the third region 24, similarly, a tilt angle of the central portion 62 in a further groove is greater than that of the central portion 56 in the other groove.

In the tire 2, a rubber hardness of the first region 20 is higher than that of the second region 22. Therefore, the first region 20 is more excellent in a straight running stability and a wear resistance than the second region 22. On the other hand, the second region 22 is more excellent in a grip performance than the first region 20. The rubber hardness of the second region 22 is higher than that of the third region 24. Therefore, the second region 22 is more excellent in the straight running stability and the wear resistance than the third region 24. The third region 24 is more excellent in the grip performance than the second region 22. In the tire 2, a rubber hardness of the region positioned on the center side is higher than that on the adjacent tread end side. The region positioned on the center side is more excellent in the straight running stability and the wear resistance than the region positioned on the adjacent tread end side. The region positioned on the tread end side is more excellent in the grip performance than the region positioned on the center side. In the tire 2, thus, a straight running performance and a cornering performance are compatible with each other.

The early reaching portion 74 of the groove 38 has a large amount of deformation in a region having a low rubber hardness. The early reaching portion 74 having the low rubber hardness is apt to have an amount of wear increased. Referring to the tilt angle of the wall surface 70 of the groove 38 in the tire 2, a minimum value of the second region 22 is set to be greater than that of the first region 20. Consequently, the amount of wear of the early reaching portion 74 in the second region 22 can be prevented from being larger than that of the early reaching portion 74 in the first region 20. Referring to the tilt angle of the wall surface 70 of the groove 38, a minimum value of the third region 24 is set to be greater than that of the second region 22. Consequently, the amount of wear of the early reaching portion 74 in the third region 24 can be prevented from being larger than that of the early reaching portion 74 in the second region 22. Thus, the amount of wear of the early reaching portion 74 in the region positioned on the tread end side can be prevented from being larger than that in the region positioned on the center side.

In the first region 20, a ratio (WC1 / WT1) of the width WC1 of the central portion to the width WT1 in the axial direction is 0.6. The tilt angle $\alpha1$ of the central portion 50 is constant. Therefore, the early reaching portion 74 is uniformly worn within a range of the width WC1 of the central portion. In the central portion 50, partial wear is prevented from occurring in the tread surface 18 around the groove 38. From this viewpoint, it is preferable that the ratio (WC1 / WT1) of the width WC1 of the central portion to the width WT1 in the axial direction should be equal to or higher than 0.5. From the same viewpoint, it is preferable that a ratio (WC2 / WT2) of the width WC2 of the central portion to the width WT2 in the axial direction should be equal to or higher than 0.5 in the second region 22. In the third region 24, it is preferable that a ratio (WC3 /WT3) of the width WC3 of the central portion to the width WT3 in the axial direction should be equal to or higher than 0.5.

In the tire 2, the tilt angle of the wall surface 70 of the groove 38 is gradually increased from the tilt angle $\alpha1$ to the tilt angle $\alpha2$ through the ends 52 and 60. Therefore, a characteristic of the tread 4 can be prevented from being rapidly changed in a transition of a contact surface with a road surface between the first region 20 and the second region 22. More specifically, the tire 2 is excellent in a transient characteristic. From this viewpoint, it is preferable that the ratio (WC1 / WT1) of the width WC1 of the central portion to the width WT1 in the axial direction of the first region 20 should be equal to or lower than 0.8. From the same viewpoint, it is preferable that the ratio (WC2 / WT2) of the width WC2 of the central portion to the width WT2 in the axial direction of the second region 22 should be equal to or lower than 0.8. It is preferable that the ratio (WC3 / WT3) of the width WC3 of the central portion to the width WT3 in the axial direction of the third region 24 should be equal to or lower than 0.8.

By increasing a ratio of a difference in the tilt angle of the wall surface 70 to the difference between the rubber hardness in the region positioned on the center side and the rubber hardness on the adjacent tread end side, it is possible to reduce a difference in the amount of wear between the adjacent regions to each other. From this viewpoint, it is preferable that a ratio (($\alpha$2 - $\alpha$1) / (H1 - H2)) of a difference ($\alpha$2 - $\alpha$1) between the tilt angle $\alpha$1 of the first region 20 and the tilt angle $\alpha$2 of the second region 22 to a difference (H1 - H2) between a rubber hardness H1 of the first region 20 and a rubber hardness H2 of the second region 22 should be equal to or higher than one. It is more preferable that the ratio (($\alpha$2 - $\alpha$1) / (H1 - H2)) should be equal to or higher than 1.25. Similarly, a ratio (($\alpha$3 - $\alpha$2) / (H2 - H3)) is preferably equal to or higher than one and is further preferably equal to or higher than 1.25 in the second region 22 and the third region 24.

The tire 2 in which the ratio (($\alpha$2 - $\alpha$1) / (H1 - H2)) is not excessively increased is excellent in the transient characteristic. From this viewpoint, the ratio (($\alpha$2 - $\alpha$1) /(H1- H2)) is preferably equal to or lower than three and is further preferably equal to or lower than 2.75. In the second region 22 and the third region 24, similarly, the ratio (($\alpha$3 - $\alpha$2) / (H2 - H3)) is preferably equal to or lower than three and is further preferably equal to or lower than 2.75.

In a normal rotation of the tire 2, the late reaching portion 76 comes in contact with the road surface via the groove 38 after the early reaching portion 74 of the tread surface 18. In the normal rotation of the tire 2, the early reaching portion 74 is positioned on a kick-out side from the road surface when getting away from the road surface. The early reaching portion 74 is apt to have the amount of wear increased. In the tire 2, the tilt angle of the wall surface 70 linked to the early reaching portion 74 is increased. Consequently, the amount of wear of the early reaching portion 74 is prevented from being increased. Partial wear of the tread surface 18 around the groove 38 can be prevented from occurring.

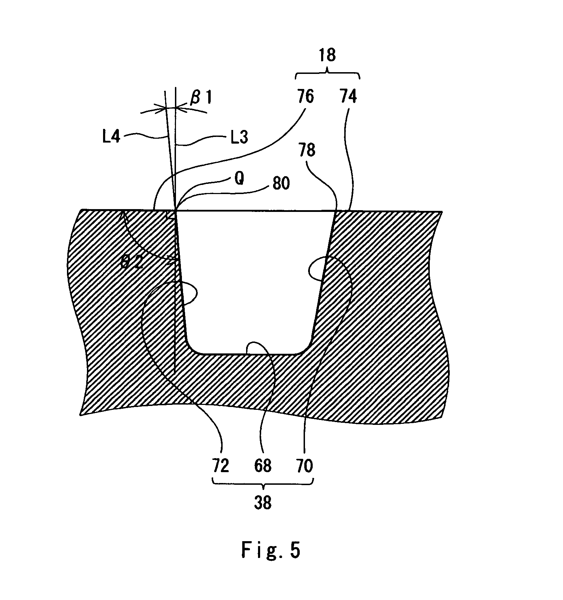

Fig. 5 shows a section of the groove 38 in the first region 20. A point Q indicates a point of the edge 80 in the section of Fig. 5. A line V-V forms a perpendicular section to the edge 80 as shown in Fig. 3. A line L3 in Fig. 5 is a perpendicular to the tread surface 18 which passes through the point Q. A line L4 is an extended line of the wall surface 72 in the section of Fig. 5. An angle $\beta$1 is formed by the lines L3 and L4.

In addition to the tilt of the wall surface 70 linked to the early reaching portion 74, it is also possible to tilt the wall surface 72 linked to the late reaching portion 76. In the tire 2, the wall surface 70 is tiled and the wall surface 72 is also tilted. The angle $\beta$1 is a tilt angle of the wall surface 72 in the groove 38. The tilt angle $\beta$1 is measured by setting, as a positive, a direction in which an angle $\theta$2 between the tread surface 18 and the wall surface 72 is greater than 90 degrees and setting, as a negative, a direction in which the angle $\theta$2 is smaller than 90 degrees. In the central portion 50, a tilt of the wall surface 72 is constant. In other words, the tilt angle $\beta$1 is a constant angle. The tilt angle $\beta$1 is measured through a section of the tread 4 which is cut out perpendicularly to the edge 80.

In the second region 22, a tilt angle $\beta$2 of the central portion 56 is obtained in the same manner as the tilt angle $\beta$1. The tilt angle $\beta$2 is a constant angle. The tilt angle $\beta$2 is greater than the tilt angle $\beta$1 of the first region 20. In the wall surface 72 within a range of the ends 52 and 60, the tilt angle is gradually increased from the tilt angle $\beta$1 to the tilt angle $\beta$2 in a direction from the central portion 50 to the central portion 56.

In the third region 24, a tilt angle $\beta$3 of the central portion 62 is obtained in the same manner as the tilt angle $\beta$1. The tilt angle $\beta$3 is a constant angle. The tilt angle $\beta$3 is greater than the tilt angle $\beta$2 of the second region 22. In the wall surface 72 within a range of the ends 58 and 66, the tilt angle is gradually increased from the tilt angle $\beta$2 to the tilt angle $\beta$3 in a direction from the central portion 56 to the central portion 62. The tilt angles $\beta$1, $\beta$2 and $\beta$3 are other examples of tilt angles $\delta$1, $\delta$2 and $\delta$3 of the wall surface of the groove according to the present invention.

In the central portion 50 of the tire 2, the tilt angle $\alpha$1 of the wall surface 70 is set to be greater than the tilt angle $\beta$1 of the wall surface 72. In the central portion 56, the tilt angle $\alpha$2 of the wall surface 70 is set to be greater than the tilt angle $\beta$2 of the wall surface 72. In the central portion 62, the tilt angle $\alpha$3 of the wall surface 70 is set to be greater than the tilt angle $\beta$3 of the wall surface 72. In a normal rotating direction of the tire 2 (a circumferential direction of the tire 2), the tilt angle of the wall surface 70 linked to the early reaching portion 74 is set to be greater than that of the wall surface 72 linked to the late reaching portion 76.

Referring to the tilt angle of the wall surface 72 of the groove 38, a minimum value of the second region 22 is set to be greater than that of the first region 20. Consequently, the amount of wear of the late reaching portion 76 in the second region 22 is prevented from being larger than that of the late reaching portion 76 in the first region 20. Referring to the tilt angle of the wall surface 72, a minimum value of the third region 24 is set to be greater than that of the second region 22. Consequently, the amount of wear of the late reaching portion 76 in the third region 24 is prevented from being larger than that of the late reaching portion 76 in the second region 22. Consequently, the amount of wear of the late reaching portion 76 in the region positioned on the tread end side is prevented from being larger than that in the region positioned on the center side.

In the tire 2, the first region 20 having a high hardness mainly comes in contact with the ground in the straight running. The tire 2 is excellent in a straight running stability performance. In the cornering, the third region 24 having a low hardness mainly comes in contact with the ground. The third region 24 having a low rubber hardness H3 is excellent in a grip performance. The tire 2 is excellent in a cornering performance. Amotorcycle using the tire 2 for a rear tire has straight running and cornering performances which can be compatible with each other. In the tire 2, furthermore, it is possible to prevent the partial wear of the tread surface 18 around the grooves 38, 40, 42, 44, 46 and 48 from occurring.

In a tire having a large number of divisions of a tread region, a change in a material for each of the divided regions is small. When the contact surface of the tread surface carries out a transition between the region positioned on the center side and the region positioned on the tread end side, an uncomfortable feeling given to a rider can be relieved. The tire having the large number of divisions of the tread is excellent in a transient characteristic. In the tire having the large number of divisions of the tread, moreover, partial wear of a groove can be suppressed. From this viewpoint, it is preferable that the number of the divisions of the tread should be equal to or larger than five. On the other hand, in respect of a productivity, it is preferable that the number of the divisions of the tread should be small. From this viewpoint, it is preferable that the number of the divisions of the tread should be equal to or smaller than 13.

Although the rear tire has been described in the embodiment, the present invention can be carried out for a front tire in the same manner.

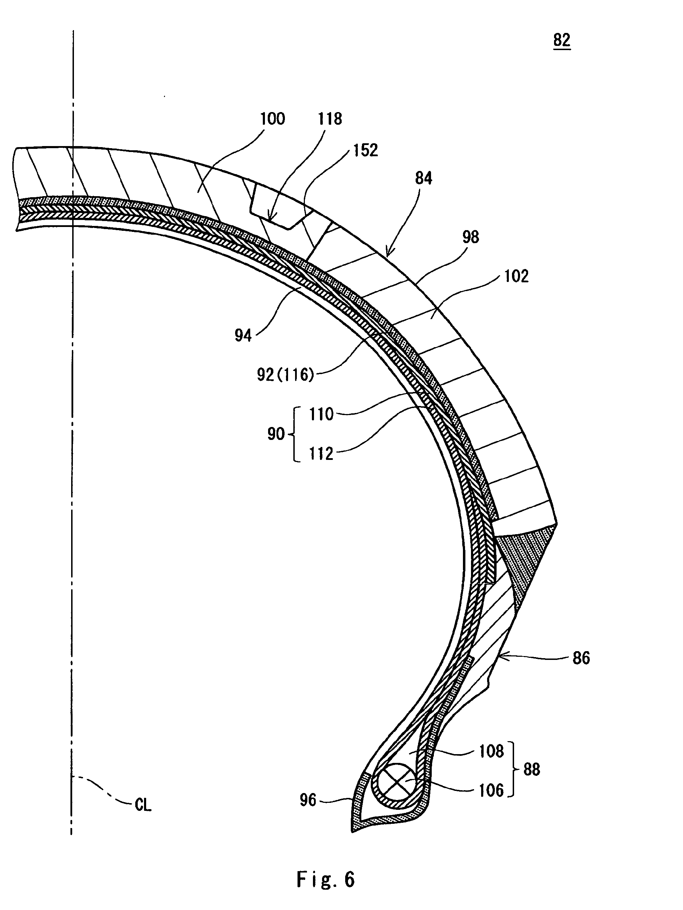

Fig. 6 shows a tire 82 according to another embodiment of the present invention. In Fig. 6, a vertical direction is set to be a radial direction and a transverse direction is set to be an axial direction. A one-dotted chain line CL represents an equator plane. The tire 82 includes a tread 84, a pair of sidewalls 86, a pair of beads 88, a carcass 90, a belt 92, an inner liner 94 and a pair of chafers 96. The tire 82 is a pneumatic tire of a tubeless type. The tire 82 is attached to a motorcycle. Herein, description will be given to a structure in which the tire 82 is different from the tire 2. For the same structure as the tire 2, description will be omitted.

The tread 84 includes a tread surface 98 to come in contact with a road surface. The tread 84 is divided into three parts. The tread 84 includes a first region 100 and a pair of second regions 102. The first region 100 is positioned on a center in the axial direction of the tread 84. The second region 102 is positioned on a tread end side adjacently to the first region 100. The second regions 102 make a pair which is symmetrical with respect to the equator plane CL of the tire 82. The first region 100 and the second region 102 are formed by crosslinked rubber compositions, respectively. Materials of the first region 100 and the second region 102 are different from each other. In the tire 82, a rubber hardness of the first region 100 is lower than that of the second region 102.

The sidewall 86 is extended almost inward in the radial direction from an end of the tread 84. The bead 88 is extended almost inward in the radial direction from the sidewall 86. The bead 88 includes a core 106 and an apex 108 extended outward in the radial direction from the core 106.

The carcass 90 is formed by carcass plies 110 and 112. The carcass ply 110 is extended along an internal surface of the tread 84. The carcass ply 112 is extended along internal surfaces of the carcass ply 110 and the sidewalls 86. The carcass ply 112 is folded back from an inside to an outside in the axial direction around the core 106.

The belt 92 is positioned between the carcass 90 and the tread 84. The belt 92 is formed by a belt ply 116. The inner liner 94 is bonded to an inner peripheral surface of the carcass 90.

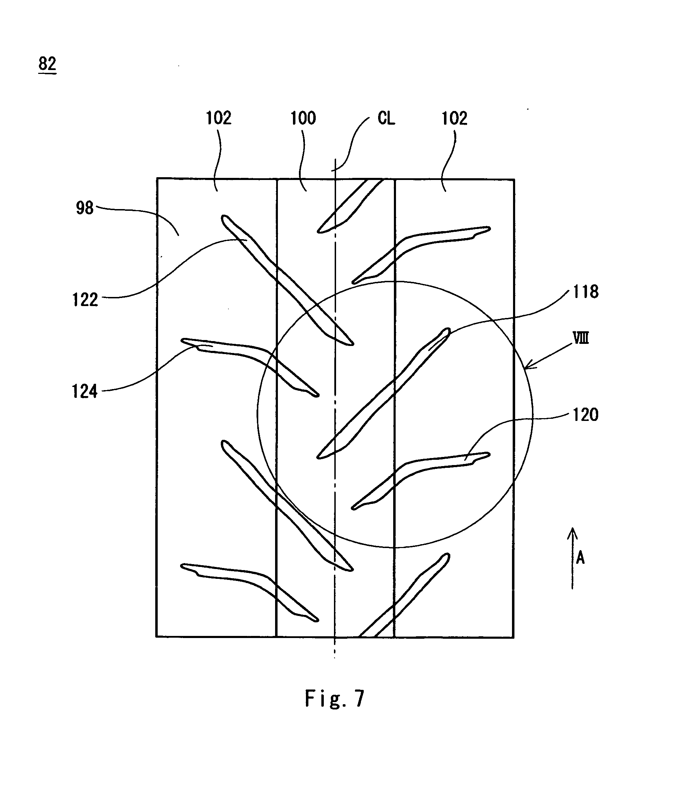

Fig. 7 illustrates a part of the tread surface 98 in the tire 82 in a projection onto a cylindrical surface. The tread 84 includes grooves 118, 120, 122 and 124. An arrow A indicates a direction of the tire 82 which rolls in a forward direction. The arrow A indicates a normal rotating direction of the tire 82. The grooves 118, 120, 122 and 124 are repetitively formed on the tread surface 98 with a phase shifted in the direction of the arrow A. The grooves 118, 120, 122 and 124 are extended with a tilt to a normal rotating direction of the tire 82, respectively. A shape of the groove 118 and that of the groove 122 are symmetrical with respect to the equator plane CL. A shape of the groove 120 and that of the groove 124 are symmetrical with respect to the equator plane CL.

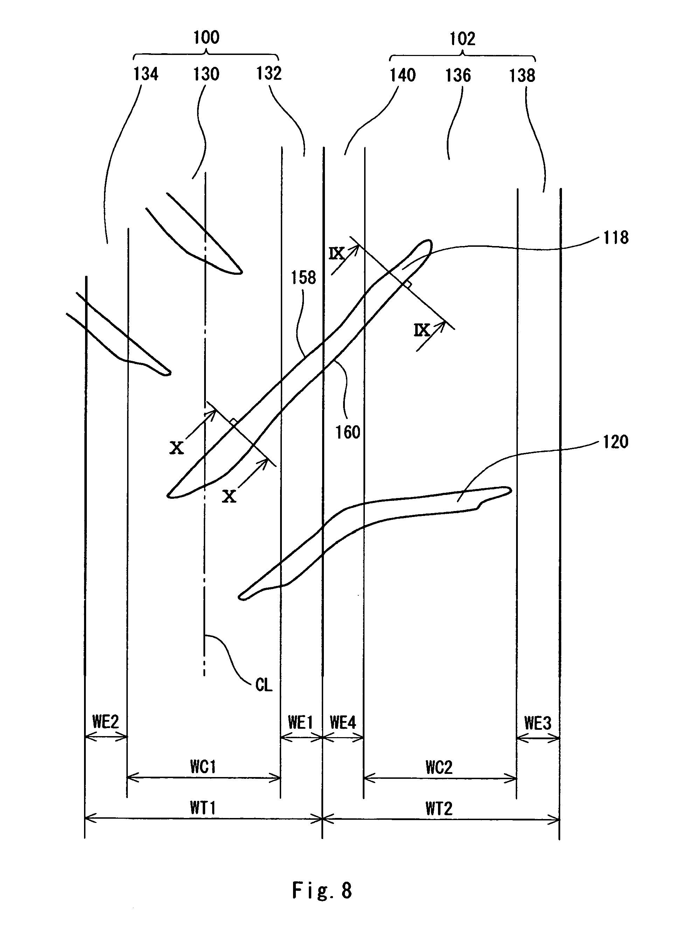

As shown in Fig. 8, the groove 118 is formed across the first region 100 positioned on the center and the second region 102 positioned on the tread end side. The groove 120 is formed across the first region 100 positioned on the center side and the second region 102 positioned on the tread end side.

The first region 100 includes a central portion 130 and ends 132 and 134. The central portion 130 is positioned on a center in the axial direction of the first region 100. The end 132 is positioned on an outside in the axial direction of the central portion 130 and is linked to one of the second regions 102. The end 134 is positioned on the outside in the axial direction and is linked to the other second region 102. A double arrow WC1 indicates a width in the axial direction of the central portion 130. A double arrow WT1 indicates a width in the axial direction of the first region 100. A double arrow WE1 indicates a width in the axial direction of the end 132. A double arrow WE2 indicates a width in the axial direction of the end 134. The end widths WE1 and WE2 are equal to each other.

The second region 102 includes a central portion 136 and ends 138 and 140. The central portion 136 is positioned on a center in the axial direction of the second region 102. The end 138 is positioned on an end of the tread 84 at an outside in the axial direction of the central portion 136. The end 140 is positioned on the outside in the axial direction of the central portion 136 and is linked to the first region 100. A double arrow WC2 indicates a width in the axial direction of the central portion 136. A double arrow WT2 indicates a width in the axial direction of the second region 102. A double arrow WE3 indicates a width in the axial direction of the end 138. A double arrow WE4 indicates a width in the axial direction of the end 140. The end widths WE3 and WE4 are equal to each other.

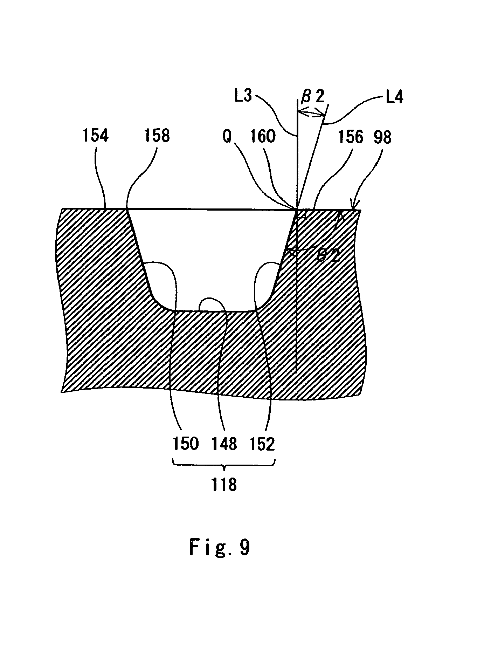

Fig. 9 shows a section of the groove 118. The groove 118 includes a bottom surface 148, a wall surface 150 and a wall surface 152. The wall surfaces 150 and 152 are extended in a longitudinal direction of the groove 118. The wall surfaces 150 and 152 are erected from the bottom surface 148 and are linked to the tread surface 98. The tread surface 98 includes an early reaching portion 154, a late reaching portion 156, and edges 158 and 160. The early reaching portion 154 is an end of the tread surface 98 extended along the groove 118. The early reaching portion 154 is linked to the wall surface 150. The edge 158 is a segment for crossing the early reaching portion 154 of the tread surface 98 and the wall surface 150. The late reaching portion 156 is an end of the tread surface 98 extended along the groove 118. The late reaching portion 156 is linked to the wall surface 152. The edge 160 is a segment for crossing the late reaching portion 156 of the tread surface 98 and the wall surface 152.

A point Q indicates a point of the edge 160 in the section of Fig. 9. A line IX-IX forms a perpendicular section to the edge 160 as shown in Fig. 8. A line L3 in Fig. 9 is a perpendicular to the tread surface 98 which passes through the point Q. A line L4 is an extended line of the wall surface 152 in the section of Fig. 9. An angle $\beta2$ in Fig. 9 is formed by the lines L3 and L4. The angle $\beta2$ is a tilt angle of the wall surface 152 in the groove 118. The tilt angle $\beta2$ is measured by setting, as a positive, a direction in which an angle $\theta2$ between the tread surface 98 and the wall surface 152 is greater than 90 degrees and setting, as a negative, a direction in which the angle $\theta2$ is smaller than 90 degrees. In the central portion 136, a tilt of the wall surface 152 is constant. In other words, the tilt angle $\beta2$ is a constant angle. The tilt angle $\beta2$ is measured through a section of the tread 84 which is cut out perpendicularly to the edge 160.

In the first region 100, a tilt angle $\beta1$ of the wall surface 152 in the central portion 130 is obtained in the same manner as the tilt angle $\beta2$. The tilt angle $\beta1$ is a constant angle. The tilt angle $\beta1$ of the first region 100 is greater than the tilt angle $\beta2$ of the second region 102. In the wall surface 152 within a range of the ends 132 and 140, the tilt angle is gradually increased from the tilt angle $\beta2$ to the tilt angle $\beta1$ in a direction from the central portion 136 to the central portion 130. The tilt angles $\beta1$ and $\beta2$ are further examples of tilt angles $\delta1$ and $\delta2$ of the wall surface of the groove according to the present invention.

In the tire 82, the groove 120 is also formed in the same manner as the groove 118. The groove 120 is formed across the first region 100 and the second region 102. A tilt angle of the wall surface in the central portion 130 of the first region 100 in the groove 120 is constant. A tilt angle of the wall surface in the central portion 136 of the second region 102 in the groove 120 is constant. The tilt angle of the central portion 130 is greater than that of the central portion 136. In the wall surface within a range of the ends 132 and 140, the tilt angle is gradually increased from the tilt angle of the central portion 136 to that of the central portion 130. The tilt angle is increased in a direction from the central portion 136 to the central portion 130.

Referring to the tire 82, the description has been given to the groove provided across the first region 100 and the second region 102. However, a groove is also formed in one of the regions in the same manner. More specifically, it is assumed that the tire 82 includes one of the grooves formed in the first region 100 and the other groove formed in the second region 102. A tilt angle of the central portion 130 in one of the grooves is greater than that of the central portion 136 in the other groove.

In the tire 82, a rubber hardness of the second region 102 is higher than that of the first region 100. Therefore, a great camber thrust is obtained in the tire 82. On the other hand, the first region 100 is more excellent in a disturbance absorbing performance than the second region 102. In the tire 82, a rubber hardness of the region positioned on the center side is lower than that of the region positioned on the adjacent tread end side. The region positioned on the center side is more excellent in the disturbance absorbing performance than the region positioned on the adjacent tread end side. The region positioned on the tread end side contributes to the generation of the great camber thrust. In the tire 82, thus, straight running and cornering performances are compatible with each other.

The late reaching portion 156 of the groove 118 has a large amount of deformation in a region having a low rubber hardness. The late reaching portion 156 having the low rubber hardness is apt to have an amount of wear increased. In the late reaching portion 156, an amount of wear in the first region 100 is apt to be larger than that in the second region 102. Referring to the tilt angle of the wall surface 152 of the groove 118, a minimum value of the first region 100 is set to be greater than that of the second region 102. Consequently, the amount of wear of the late reaching portion 156 in the first region 100 can be prevented from being larger than that of the late reaching portion 156 in the second region 102. Thus, the amount of wear of the late reaching portion 156 in the region positioned on the center side can be prevented from being larger than that of the region positioned on the tread end side.

In the first region 100, a ratio (WC1 / WT1) of the width WC1 of the central portion to the width WT1 in the axial direction is 0.6. In the first region 100, the tilt angle $\beta1$ of the central portion 130 is constant. Therefore, the late reaching portion 156 is uniformly worn within a range of the width WC1 of the central portion. In the central portion 130, partial wear is prevented from occurring in the tread surface 98 around the groove 118. From this viewpoint, it is preferable that the ratio (WC1 / WT1) of the width WC1 of the central portion to the width WT1 in the axial direction should be equal to or higher than 0.5. From the same viewpoint, it is preferable that a ratio (WC2 / WT2) of the width WC2 of the central portion to the width WT2 in the axial direction should be equal to or higher than 0.5 in the second region 102.

In the tire 82, the tilt angle of the wall surface 152 of the groove 118 is gradually increased from the tilt angle β2 to the tilt angle β1 within a range of the ends 140 and 132. Therefore, a characteristic of the tread 84 can be prevented from being rapidly changed in a transition of a contact surface with a road surface between the first region 100 and the second region 102. More specifically, the tire 82 is excellent in a transient characteristic. From this viewpoint, it is preferable that the ratio (WC1 / WT1) of the width WC1 of the central portion to the width WT1 in the axial direction of the first region 100 should be equal to or lower than 0.8. From the same viewpoint, it is preferable that the ratio (WC2 / WT2) of the width WC2 of the central portion to the width WT2 in the axial direction of the second region 102 should be equal to or lower than 0.8.

In particular, a variation in the tilt angle of the wall surface 152 linked to the late reaching portion 156 greatly contributes to the transient characteristic of the tire 82. From this viewpoint, it is preferable that the tilt angle of the wall surface of the groove 118 should be determined by the wall surface 152 linked to the late reaching portion 156.

By increasing a ratio of a difference in the tilt angle of the wall surface 152 to the difference between the rubber hardness in the region positioned on the center side and the rubber hardness on the adjacent tread end side, it is possible to reduce a difference in the amount of wear between the adjacent regions to each other. From this viewpoint, it is preferable that a ratio ((β1 - β2) / (H2 - H1)) of a difference (β1 - β2) between the tilt angle β1 of the first region 100 and the tilt angle β2 of the second region 102 to a difference (H2 - H1) between a rubber hardness H2 of the second region 102 and a rubber hardness H1 of the first region 100 should be equal to or higher than one. It is further preferable that the ratio ((β1 - β2) / (H2 - H1)) should be equal to or higher than 1.25.

The tire 82 in which the ratio ((β1 - β2) / (H2 - H1)) is not excessively increased is excellent in the transient characteristic. From this viewpoint, the ratio ((β1 - β2) /(H2 - H1)) is preferably equal to or lower than three and is further preferably equal to or lower than 2.75.

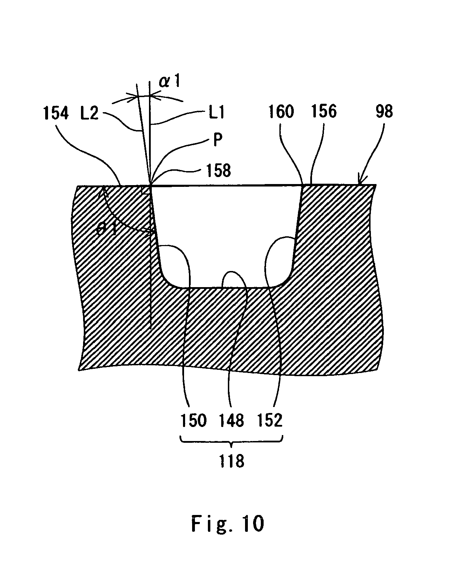

Fig. 10 is a sectional view taken along a line X-X in Fig. 8. Fig. 10 shows a section of the groove 118 in the first region 100. A point P indicates a point of the edge 158 in the section of Fig. 10. The line X-X forms a perpendicular section to the edge 158 as shown in Fig. 8. A line L1 in Fig. 10 is a perpendicular to the tread surface 98 which passes through the point P. A line L2 is an extended line of the wall surface 150 in the section of Fig. 10. An angle α1 is formed by the lines L1 and L2.

In addition to the tilt of the wall surface 152 linked to the late reaching portion 156, it is also possible to tilt the wall surface 150 linked to the early reaching portion 154. In the tire 82, the wall surface 152 is tiled and the wall surface 150 is also tilted. The angle α1 is a tilt angle of the wall surface 150 in the groove 118. The tilt angle α1 is measured by setting, as a positive, a direction in which an angle θ1 between the tread surface 98 and the wall surface 150 is greater than 90 degrees and setting, as a negative, a direction in which the angle θ1 is smaller than 90 degrees. In the central portion 130, a tilt of the wall surface 150 is constant. In other words, the tilt angle α1 is a constant angle. The tilt angle α1 is measured through a section of the tread 84 which is cut out perpendicularly to the edge 158.

In the second region 102, a tilt angle α2 of the central portion 136 is obtained in the same manner as the tilt angle α1. The tilt angle α2 is a constant angle. The tilt angle α1 of the first region 100 is greater than the tilt angle α2. In the wall surface 150 within a range of the ends 132 and 140, the tilt angle is gradually increased from the tilt angle α2 to the tilt angle α1 in a direction from the central portion 136 to the central portion 130. The tilt angles α1 and α2 are further examples of tilt angles δ1 and δ2 of the wall surface of the groove according to the present invention.

Referring to the tilt angle of the wall surface 150 of the groove 118 in the tire 82, a minimum value of the first region 100 is set to be greater than that of the second region 102. Consequently, the amount of wear of the early reaching portion 154 in the first region 100 is prevented from being larger than that of the early reaching portion 154 in the second region 102. Thus, the amount of wear of the early reaching portion 154 in the region positioned on the center side is prevented from being larger than that of the region positioned on the tread end side.

In the tire 82, the first region 100 having a low hardness mainly comes in contact with the ground in the straight running. The tire 82 is excellent in a disturbance absorbing performance. In the cornering, the second region 102 having a high hardness mainly comes in contact with the ground. The second region 102 having a high rubber hardness H2 contributes to a generation of a great camber thrust. The tire 82 is excellent in a cornering performance. A motorcycle using the tire 82 for a front tire has straight running and cornering performances which can be compatible with each other. In the tire 82, furthermore, it is possible to prevent the partial wear of the tread surface 98 around the grooves 118, 120, 122 and 124 from occurring.

In some cases, a tire having a tread divided into at least five regions includes a groove provided from a region positioned on a center to a region positioned on a tread end side. In the groove, a rubber hardness in each of the regions present from the center to the tread end is lower than that of an adjacent region to the tread end side. A minimum value of the tilt angle of the wall surface 152 is set to be greater than that of an adjacent region to the tread end side. It is further preferable that the minimum value of the tilt angle of the wall surface 150 should be set to be greater than that of the adjacent region to the tread end side.

Although the front tire has been described in the embodiment, the present invention can also be carried out for a rear tire.

The rubber hardness is measured by pressing a Durometer of Type A against the tire 2 on a condition of 23°C in accordance with the regulations of "JIS-K 6253".

In the present invention, the dimension and the angle of each member of the tire 2 or 82 are measured in a state in which the tire 2 or 82 is incorporated in a normal rim and is filled with air to obtain a normal internal pressure if there is no particular description. During the measurement, a load is not applied to the tire 2 or 82. In this specification, the normal rim implies a rim determined in rules on which the tire 2 or 82 depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire 2 or 82 depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure.

EXAMPLES

[Experiment 1]

[Example 1]

A rear tire according to an example 1 which has the structure shown in Fig. 1 was obtained. A tread of the tire is divided into five parts. In the tire, a center region is set to be a first region. A second region and a third region are provided in order from the first region toward both tread end sides. In the tire, the first region, a pair of second regions and a pair of third regions equally divide a tread surface into five parts. A size of the rear tire is "190/50ZR17". A tilt angle $\alpha 1$ in Table 1 indicates a tilt angle of a wall surface of a groove in a central portion of the first region. The tilt angle $\alpha 1$ was measured over a wall surface of a groove linked to an early reaching portion of the tread surface. A tilt angle $\alpha 2$ indicates a tilt angle of a wall surface of a groove in a central portion of the second region which was measured in the same manner as the tilt angle $\alpha 1$. A tilt angle $\alpha 3$ also indicates a tilt angle of a wall surface of a groove in a central portion of the third region which was measured in the same manner.

[Examples 2 to 7]

In a tire according to each of examples 2 to 7, tilt angles $\alpha 2$ and $\alpha 3$ were set to be angles shown in the Table 1. The others are the same as the structure of the tire according to the example 1.

[Comparative Examples 1 and 2]

In a tire according to a comparative example 1, a tilt angle of a wall surface of a groove was set to be 10 degrees. The tilt angle is constant within a range from the first region to the third region. The others are the same as the structure of the tire according to the example 1. In a tire according to a comparative example 2, a tilt angle of a wall surface of a groove was set to be 36 degrees. The others are the same as the structure of the tire according to the example 1.

[Evaluation of Wear Resistance and Evaluation of Grip Performance and Contact Feeling]

A trial tire was attached to a rear wheel of a motorcycle for a race which has a displacement of 1000 cc. A rim width was set to be 6.0 inches and an internal pressure of air in the tire was set to be 250 kPa. A conventional tire was exactly used for a tire of a front wheel. The motorcycle was caused to make 10 rounds on a circuit course at a speed of 200 km/h, and a rider was caused to execute a sensuous evaluation for a grip performance and a contact feeling. An extent of wear of the groove of the tread and presence of partial wear after running were evaluated. The result is shown in the following Table 1. The evaluation is executed with a full mark of five and a greater numeral represents a higher evaluation.

[Evaluation of Transient Characteristic]

A body of a motorcycle having a trial tire attached as a rear wheel tire was gradually tilted during running at a speed of 150 km/h and the motorcycle was caused to run with a tilt to a full bank. At this time, a rider was caused to execute a sensuous evaluation. The result is shown in the following Table 1. A greater numeral represents a higher evaluation. The evaluation is executed in a full mark of five, and a greater numeral represents a higher evaluation.

Table 1 Result of evaluation

| | | | Compara. example 1 | Example 7 | Example 5 | Example 3 | Example 1 | Example 2 | Example 4 | Example 6 | Compara. example 2 |
|---|---|---|---|---|---|---|---|---|---|---|---|
| Tread | First region | Rubber hardness H1 (JIS-A) | 64 | 64 | 64 | 64 | 64 | 64 | 64 | 64 | 64 |
| | | Tilt angle $\alpha 1$ (°) | 10 | 10 | 10 | 10 | 10 | 10 | 10 | 10 | 36 |
| | Second region | Rubber hardness H2 (JIS-A) | 60 | 60 | 60 | 60 | 60 | 60 | 60 | 60 | 60 |
| | | Tilt angle $\alpha 2$ (°) | 10 | 12 | 14 | 15 | 18 | 21 | 22 | 24 | 36 |
| | Third region | Rubber hardness H3 (JIS-A) | 56 | 56 | 56 | 56 | 56 | 56 | 56 | 56 | 56 |
| | | Tilt angle $\alpha 3$ (°) | 10 | 14 | 18 | 20 | 26 | 32 | 34 | 36 | 36 |
| | $((\alpha 2-\alpha 1)/(H1-H2))$ | | 0 | 0.5 | 1 | 1.25 | 2 | 2.75 | 3 | 3.5 | 0 |
| | $((\alpha 3-\alpha 2)/(H2-H3))$ | | 0 | 0.5 | 1 | 1.25 | 2 | 2.75 | 3 | 3 | 0 |
| Evaluation | Wear resistance | | 2.9 | 3.0 | 3.1 | 3.1 | 3.2 | 3.3 | 3.4 | 3.4 | 3.5 |
| | Grip performance | | 2.9 | 3.0 | 3.0 | 3.0 | 3.1 | 3.2 | 3.3 | 3.3 | 3.3 |
| | Contact feeling | | 2.9 | 3.0 | 3.0 | 3.1 | 3.1 | 3.2 | 3.2 | 3.3 | 3.1 |
| | Transient characteristic | | 2.8 | 3.0 | 3.1 | 3.2 | 3.2 | 3.1 | 3.1 | 3.0 | 2.8 |

In the tires according to the examples, an occurrence of partial wear was not observed. As shown in the Table 1, the tires according to the examples are excellent in the wear resistance. The tires according to the examples are excellent in the transient characteristic between straight running and cornering. In the tires according to the examples, the tire performance and the transient characteristic are compatible with each other. From the result of the evaluation, advantages of the present invention are apparent.

[Experiment 2]

[Examples 8 to 12]

In a tire according to each of examples 8 to 12, a ratio of a width WCn of a central portion to a width WTn of a tread was set as shown in the Table 1. The others are the same as the structure of the tire according to the example 1.

[Evaluation of Transient Characteristic]

A trial tire was attached as a rear wheel tire of the motorcycle for a race which was used in the experiment 1. A body of the motorcycle was gradually tilted during running at a speed of 150 km/h and the motorcycle was caused to run with a tilt to a full bank. At this time, a rider was caused to execute a sensuous evaluation. The result is shown in the following Table 2. The evaluation is executed in a full mark of five, and a greater numeral represents a higher evaluation.

[Evaluation of Wear Resistance]

A motorcycle having a trial tire attached as a rear wheel tire was caused to run over a circuit course on a condition of a speed of 150 km/h and a distance of 200 km. An extent of wear of a groove of a tread and presence of partial wear after the running were evaluated. The result is shown in the following Table 2. The evaluation is executed in a full mark of five, and a greater numeral represents a higher evaluation.

Table 2 Result of evaluation

| | | | Example 11 | Example 9 | Example 1 | Example 8 | Example 10 | Example 12 |
|---|---|---|---|---|---|---|---|---|
| Tread | First region | Rubber hardness H1 (JIS-A) | 64 | 64 | 64 | 64 | 64 | 64 |
| | | Tilt angle $\alpha 1$ (°) | 10 | 10 | 10 | 10 | 10 | 10 |
| | | Ratio (WC1/WT1) | 0.4 | 0.5 | 0.6 | 0.7 | 0.75 | 0.8 |
| | Second region | Rubber hardness H2 (JIS-A) | 60 | 60 | 60 | 60 | 60 | 60 |
| | | Tilt angle $\alpha 2$ (°) | 18 | 18 | 18 | 18 | 18 | 18 |
| | | Ratio (WC2/WT2) | 0.4 | 0.5 | 0.6 | 0.7 | 0.75 | 0.8 |
| | Third region | Rubber hardness H3 (JIS-A) | 56 | 56 | 56 | 56 | 56 | 56 |
| | | Tilt angle $\alpha 3$ (°) | 26 | 26 | 26 | 26 | 26 | 26 |
| | | Ratio (WC3/WT3) | 0.4 | 0.5 | 0.6 | 0.7 | 0.75 | 0.8 |

(continued)

|  |  | Example 11 | Example 9 | Example 1 | Example 8 | Example 10 | Example 12 |
|---|---|---|---|---|---|---|---|
| Evaluation | Wear resistance | 3.0 | 3.0 | 3.1 | 3.2 | 3.2 | 3.3 |
|  | Transient characteristic | 2.9 | 3.0 | 3.1 | 3.2 | 3.1 | 3.0 |

As shown in the Table 2, in the examples, the transient characteristic and the wear resistance are compatible with each other. From the result of the evaluation, advantages of the present invention are apparent.

[Experiment 3]

[Example 13]

A front tire according to an example 13 which has the structure shown in Fig. 6 was obtained. A tread of the tire is divided into three parts. In the tire, a center region is set to be a first region. A second region is provided on a tread end side in an axial direction of the first region. In the tire, the first region and a pair of second regions equally divide a tread surface into three parts. A size of the front tire is "120/70ZR17". A tilt angle $\beta 1$ in Table 3 indicates a tilt angle of a wall surface of a groove in a central portion of the first region. The tilt angle $\beta 1$ was measured over a wall surface of a groove linked to a late reaching portion of the tread surface. A tilt angle $\beta 2$ indicates a tilt angle of a wall surface of a groove in a central portion of the second region which was measured in the same manner as the tilt angle $\beta 1$.

[Examples 14 to 17]

In a tire according to each of examples 14 to 17, a tilt angle $\beta 1$ was set to be an angle shown in the Table 3. The others are the same as the structure of the tire according to the example 1.

[Comparative Example 3]

In a tire according to a comparative example 3, a tilt angle of a wall surface of a groove was set to be 12 degrees. The tilt angle is constant within a range from the first and second regions. The others are the same as the structure of the tire according to the example 13.

[Evaluation of Wear Resistance]

A trial tire was attached to a front wheel of a motorcycle for a race which has a displacement of 1000 cc. A rim width was set to be 3.5 inches and an internal pressure of air in the tire was set to be 220 kPa. A conventional tire was exactly used for a tire of a rear wheel. The motorcycle was caused to make 10 rounds on a circuit course at a speed of 200 km/h. An extent of wear of a groove of a tread and presence of partial wear after the running were evaluated. The result is shown in the following Table 3. The evaluation is executed in a full mark of five, and a greater numeral represents a higher evaluation.

[Evaluation of Transient Characteristic]

A body of a motorcycle having a trial tire attached as a front wheel tire was gradually tilted during running at a speed of 150 km/h and the motorcycle was caused to carry out cornering with a tilt to a full bank. At this time, a rider was caused to execute a sensuous evaluation. In the evaluation, transient characteristics including an addition of a steering angle, a reaction and a handling responsiveness were evaluated. The addition of a steering angle represents a handle angle at which a wheel is naturally turned when a body is tilted. The reaction represents an extent of a response to a handle input. For each of evaluation items, the evaluation was carried out in respect of presence of a rapid change in the characteristic in a transition from straight running to cornering. The result is shown in the following Table 3. The evaluation is executed in a full mark of five, and a greater numeral represents a higher evaluation.

Table 3 Result of evaluation

| | | | Compara. example 3 | Example 16 | Example 15 | Example 13 | Example 14 | Example 17 |
|---|---|---|---|---|---|---|---|---|
| Tread | First region | Rubber hardness H1 (JIS-A) | 58 | 58 | 58 | 58 | 58 | 58 |
| | | Tilt angle β1 (° ) | 12 | 13 | 14 | 16 | 18 | 22 |
| | Second region | Rubber hardness H2 (JIS-A) | 60 | 60 | 60 | 60 | 60 | 60 |
| | | Tilt angle β2 (° ) | 12 | 12 | 12 | 12 | 12 | 12 |
| | ((β2-β1)/(H1-H2)) | | 0 | 0.5 | 1 | 2 | 3 | 5 |
| Evaluation | Wear resistance | | 3.0 | 3.0 | 3.1 | 3.2 | 3.2 | 3.3 |
| | Transient characteristic | Addition of steering angle | 3.0 | 3.0 | 3.1 | 3.5 | 3.2 | 3. 1 |
| | | Reaction | 3.0 | 3.0 | 3.1 | 3.4 | 3.2 | 3. 1 |
| | | Handling responsiveness | 3.0 | 3.1 | 3.2 | 3.5 | 3. 1 | 3.0 |

In the tires according to the examples, an occurrence of partial wear was not observed. As shown in the Table 3, the tires according to the examples are excellent in the wear resistance. The tires according to the examples are excellent in the transient characteristic between straight running and cornering. In the tires according to the examples, the tire performance and the transient characteristic are compatible with each other. From the result of the evaluation, advantages of the present invention are apparent.

[Experiment 4]

[Examples 18 to 22]

In a tire according to each of examples 18 to 22, a ratio of a width WCn of a central portion to a width WTn of a tread was set as shown in the Table 3. The others are the same as the structure of the tire according to the example 13.

[Evaluation of Transient Characteristic]

A trial tire was attached to a front wheel of the motorcycle for a race which was used in the experiment 3. A body of the motorcycle was gradually tilted during running at a speed of 150 km/h and the motorcycle was caused to run with a tilt to a full bank. At this time, a rider was caused to execute a sensuous evaluation. The result is shown in the following Table 4. The evaluation is executed in a full mark of five, and a greater numeral represents a higher evaluation.

[Evaluation of Wear Resistance]

A motorcycle having a trial tire attached as a front wheel tire was caused to run over a circuit course on a condition of a speed of 150 km/h and a distance of 200 km. An extent of wear of a groove of a tread and presence of partial wear after the running were evaluated. The evaluation is executed in a full mark of five, and a greater numeral represents a higher evaluation.

Table 4 Result of evaluation

| | | | Example 21 | Example 19 | Example 13 | Example 18 | Example 20 | Example 22 |
|---|---|---|---|---|---|---|---|---|
| Tread | First region | Rubber hardness H1 (JIS-A) | 58 | 58 | 58 | 58 | 58 | 58 |
| | | Tilt angle β1 (°) | 16 | 16 | 16 | 16 | 16 | 16 |
| | | Ratio (WC1/WT1) | 0.4 | 0.5 | 0.6 | 0.7 | 0.75 | 0.8 |
| | Second region | Rubber hardness H2 (JIS-A) | 60 | 60 | 60 | 60 | 60 | 60 |
| | | Tilt angle β2 (°) | 12 | 12 | 12 | 12 | 12 | 12 |
| | | Ratio (WC2/WT2) | 0.4 | 0.5 | 0.6 | 0.7 | 0.75 | 0.8 |
| Evaluation | | Wear resistance | 2.9 | 3.0 | 3.1 | 3.2 | 3.2 | 3.2 |
| | | Transient characteristic | 3.0 | 3.1 | 3.2 | 3.1 | 3.1 | 3.0 |

As shown in the Table 4, in the examples, the transient characteristic and the wear resistance are compatible with each other. From the result of the evaluation, advantages of the present invention are apparent.
The above description is only illustrative and various changes can be made without departing from the scope of the present invention.

**Claims**

1. A tire (2) for a motorcycle comprising a tread (4) divided into a plurality of regions in an axial direction, wherein the tread has a region (20,100) positioned on a center and at least one region (24,102) positioned on an outside of the region in the axial direction, a rubber hardness H (n+1) of an (n+1) th region from the center is different from a rubber hardness Hn of an n-th region from the center when n is a natural number, the tread includes a groove (38,118), the groove has a wall surface (70,152), a minimum value of a tilt angle of the wall surface in the (n+1) th region from the center is different from that of the tilt angle in the n-th region from the center, and a minimum value of a tilt angle of a wall surface in a region having a low rubber hardness is greater than that of a tilt angle of a wall surface in a region having a high rubber hardness.

2. The tire according to claim 1, wherein the rubber hardness H (n+1) of the (n+1) th region from the center is lower than the rubber hardness Hn of the n-th region from the center, and the minimum value of the tilt angle of the wall surface in the (n+1) th region from the center is greater than that of the tilt angle in the n-th region from the center.

3. The tire according to claim 2, wherein the tread includes a groove provided across the (n+1) th region from the center and the n-th region from the center.

4. The tire according to claim 2, wherein the tread has a groove (38) provided from the region (20) positioned on the center to a region (24) positioned on a most tread end side, and a rubber hardness of each of the regions present from the center to the tread end is lower than that of an adjacent region to the center side, and a minimum value of a tilt angle of the same region is greater than that of the adjacent region to the center side.

5. The tire according to claim 2, wherein the (n+1) th region from the center has a central portion positioned on a center in an axial direction of the same region, and a tilt angle $\delta$ (n+1) of a wall surface of a groove in the central portion has a constant value, the n-th region from the center has a central portion positioned on a center in the axial direction of the same region, and a tilt angle $\delta$ (n) of a wall surface of a groove in the central portion has a constant value, the tilt angle $\delta$ (n+1) is greater than the tilt angle $\delta$ (n) , and the tilt angle of the wall surface is gradually increased from the tilt angle $\delta$ (n) to the tilt angle $\delta$ (n+1) between the central portion of the n-th region from the center and the central portion of the (n+1) th region from the center.

6. The tire according to claim 5, wherein a ratio (WCn / WTn) of a width WCn of the central portion in the n-th region from the center to a width WTn in the axial direction of the same region is equal to or higher than 0.5 and is equal to or lower than 0.75.

7. The tire according to claim 5, wherein the tilt angles $\delta$n and $\delta$(n+1) and the rubber hardnesses Hn and H (n+1) satisfy the following expression:

$$1 \leqq ((\delta(n+1) - \delta n) / (Hn - H(n+1))) \leqq 3$$

8. The tire according to claim 2, wherein the tread surface has an early reaching portion (74) and a late reaching portion (76) along the groove (38), the early reaching portion is constituted to come in contact with a road surface earlier than the late reaching portion in a circumferential direction when a normal rotation is carried out, the groove has a pair of wall surfaces (70,72), and the tilt angle is determined on any of the wall surfaces which is linked to the early reaching portion (74).

9. The tire according to claim 2, wherein the tire is attached to a rear wheel of a motorcycle.

10. The tire according to claim 1, wherein the rubber hardness H (n+1) of the (n+1) th region from the center is higher than the rubber hardness Hn of the n-th region from the center, and
the minimum value of the tilt angle of the wall surface in the n-th region from the center is greater than that of the tilt angle in the (n+1) th region from the center.

11. The tire according to claim 10, wherein the tread includes a groove provided across the (n+1) th region from the center and the n-th region from the center.

12. The tire according to claim 10, wherein the tread has a groove (118) provided from the region (100) positioned on the center to a region (102) positioned on a most tread end side, and
a rubber hardness of each of the regions present from the center to the tread end is lower than that of an adjacent region to the tread end side, and a minimum value of a tilt angle of the same region is greater than that of the adjacent region to the tread end side.

13. The tire according to claim 10, wherein the (n+1) th region from the center has a central portion positioned on a center in an axial direction of the same region, and a tilt angle $\delta$ (n+1) of a wall surface of a groove in the central portion has a constant value,
the n-th region from the center has a central portion positioned on a center in the axial direction of the same region, and a tilt angle $\delta$ (n) of a wall surface of a groove in the central portion has a constant value,
the tilt angle $\delta$ (n) is greater than the tilt angle $\delta$ (n+1), and
the tilt angle of the wall surface is gradually increased from the tilt angle $\delta$ (n+1) to the tilt angle $\delta$ (n) between the central portion of the (n+1) th region from the center and the central portion of the n-th region from the center.

14. The tire according to claim 13, wherein a ratio (WCn /WTn) of a width WCn of the central portion in the n-th region from the center to a width WTn in the axial direction of the same region is equal to or higher than 0.5 and is equal to or lower than 0.75.

15. The tire according to claim 13, wherein the tilt angles $\delta$n and $\delta$ (n+1) and the rubber hardnesses Hn and H (n+1) satisfy the following expression:

$$1 \leqq (\delta n - (\delta(n+1)) / (H(n+1) - Hn)) \leqq 3$$

16. The tire according to claim 10, wherein the tread surface has an early reaching portion (154) and a late reaching portion (156) along the groove,
the early reaching portion is constituted to come in contact with a road surface earlier than the late reaching portion in a circumferential direction when a normal rotation is carried out,
the groove has a pair of wall surfaces (150,152) and
the tilt angle is determined on any of the wall surfaces which is linked to the late reaching portion (156).

17. The tire according to claim 10, wherein the tire is attached to a front wheel of a motorcycle.

**Patentansprüche**

1. Reifen (2) für ein Motorrad, der eine Lauffläche (4) umfasst, die in einer axialen Richtung in eine Vielzahl von Bereichen unterteilt ist,
wobei die Lauffläche einen Bereich (20, 100), der an einer Mitte angeordnet ist, und zumindest einen Bereich (24, 102) aufweist, der an einer Außenseite des Bereichs in der axialen Richtung angeordnet ist,
eine Gummihärte H(n+1) eines (n+1)-ten Bereichs von der Mitte sich von einer Gummihärte Hn eines n-ten Bereichs von der Mitte unterscheidet, wenn n eine natürliche Zahl ist,
die Lauffläche eine Rille (38, 118) umfasst,
die Rille eine Wandfläche (70, 152) aufweist,
ein Minimalwert eines Neigungswinkels der Wandfläche in dem (n+1)-ten Bereich von der Mitte sich von dem des Neigungswinkels in dem n-ten Bereich von der Mitte unterscheidet, und
ein Minimalwert eines Neigungswinkels einer Wandfläche in einem Bereich, der eine niedrige Gummihärte aufweist, größer ist als der eines Neigungswinkels einer Wandfläche in einem Bereich, der eine höhere Gummihärte aufweist.

**2.** Reifen nach Anspruch 1,
wobei die Gummihärte H(n+1) des (n+1)-ten Bereichs von der Mitte niedriger als die Gummihärte Hn des n-ten Bereichs von der Mitte ist, und
der Minimalwert des Neigungswinkels der Wandfläche in dem (n+1)-ten Bereich von der Mitte größer als der des Neigungswinkels in dem n-ten Bereich von der Mitte ist.

**3.** Reifen nach Anspruch 2,
wobei die Lauffläche eine Rille umfasst, die über den (n+1)-ten Bereich von der Mitte und den n-ten Bereich von der Mitte hinweg vorgesehen ist.

**4.** Reifen nach Anspruch 2,
wobei die Lauffläche eine Rille (38) aufweist, die von dem Bereich (20), der an der Mitte angeordnet ist, bis zu einem Bereich (24), der an einer am weitesten entfernt liegenden Laufflächenendseite angeordnet ist, vorgesehen ist, und eine Gummihärte von jedem der Bereiche, die von der Mitte bis zu dem Laufflächenende vorhanden sind, niedriger als die eines an die mittlere Seite angrenzenden Bereichs ist, und ein Minimalwert eines Neigungswinkels des gleichen Bereichs größer als der des an die mittlere Seite angrenzenden Bereichs ist.

**5.** Reifen nach Anspruch 2,
wobei der (n+1)-te Bereich von der Mitte einen zentralen Abschnitt aufweist, der an einer Mitte in einer axialen Richtung des gleichen Bereichs angeordnet ist, und ein Neigungswinkel δ (n+1) einer Wandfläche einer Rille in dem zentralen Abschnitt einen konstanten Wert aufweist,
der n-te Bereich von der Mitte einen zentralen Abschnitt aufweist, der an einer Mitte in der axialen Richtung des gleichen Bereichs angeordnet ist, und ein Neigungswinkel δ(n) einer Wandfläche einer Rille in dem zentralen Abschnitt einen konstanten Wert aufweist,
der Neigungswinkel δ(n+1) größer als der Neigungswinkel δ(n) ist, und
der Neigungswinkel der Wandfläche von dem Neigungswinkel δ(n) bis zu dem Neigungswinkel δ(n+1) zwischen dem zentralen Abschnitt des n-ten Bereichs von der Mitte und dem zentralen Abschnitt des (n+1)-ten Bereichs von der Mitte allmählich zunimmt.

**6.** Reifen nach Anspruch 5,
wobei ein Verhältnis (WCn/WTn) einer Breite WCn des zentralen Abschnitts in dem n-ten Bereich von der Mitte zu einer Breite WTn in der axialen Richtung des gleichen Bereichs gleich oder höher als 0,5 und gleich oder niedriger als 0,75 ist.

**7.** Reifen nach Anspruch 5,
wobei die Neigungswinkel δn und δ(n+1) und die Gummihärten Hn und H(n+1) den folgenden Ausdruck erfüllen: $1 \leq ((\delta(n+1) - \delta n) / (Hn - H(n+1))) \leq 3$.

**8.** Reifen nach Anspruch 2,
wobei die Laufflächen-Oberfläche einen früh ankommenden Abschnitt (74) und einen spät ankommenden Abschnitt (76) entlang der Rille (38) aufweist,
der früh ankommende Abschnitt derart gebildet ist, dass er mit einem Straßenbelag früher als der spät ankommende Abschnitt in einer Umfangsrichtung in Kontakt gelangt, wenn eine normale Rotation ausgeführt wird,
die Rille ein Paar Wandflächen (70, 72) aufweist, und
der Neigungswinkel an irgendeiner der Wandflächen, die mit den früh ankommenden Abschnitt (74) verbunden ist, ermittelt wird.

**9.** Reifen nach Anspruch 2,
wobei der Reifen an einem Hinterrad eines Motorrads aufgezogen ist.

**10.** Reifen nach Anspruch 1,
wobei die Gummihärte H(n+1) des (n+1)-ten Bereichs von der Mitte höher als die Gummihärte Hn des n-ten Bereichs von der Mitte ist, und
der Minimalwert des Neigungswinkels der Wandfläche in dem n-ten Bereich von der Mitte größer als der des Neigungswinkels in dem (n+1)-ten Bereich von der Mitte ist.

**11.** Reifen nach Anspruch 10,
wobei die Lauffläche eine Rille umfasst, die über den (n+1)-ten Bereich von der Mitte und den n-ten Bereich von der Mitte hinweg vorgesehen ist.

**12.** Reifen nach Anspruch 10,
wobei die Lauffläche eine Rille (118) aufweist, die von dem Bereich (100), der an der Mitte angeordnet ist, bis zu einem Bereich (102), der an einer am weitesten entfernt liegenden Laufflächenendseite angeordnet ist, vorgesehen ist, und
eine Gummihärte eines jeden der Bereiche, der von der Mitte bis zu dem Laufflächenende vorhanden ist, niedriger als der eines an die Laufflächenendseite angrenzenden Bereichs ist, und ein Minimalwert eines Neigungswinkels des gleichen Bereichs größer als der des an die Laufflächenendseite angrenzenden Bereichs ist.

**13.** Reifen nach Anspruch 10,
wobei der (n+1)-te Bereich von der Mitte einen zentralen Abschnitt aufweist, der an einer Mitte in einer axialen Richtung des gleichen Bereichs angeordnet ist, und ein Neigungswinkel δ(n+1) einer Wandfläche einer Rille in dem zentralen Abschnitt einen konstanten Wert aufweist,
der n-te Bereich von der Mitte einen zentralen Abschnitt aufweist, der an einer Mitte in der axialen Richtung des gleichen Bereichs angeordnet ist, und ein Neigungswinkel δ(n) einer Wandfläche einer Rille in dem zentralen Abschnitt einen konstanten Wert aufweist,
der Neigungswinkel δ(n) größer als der Neigungswinkel δ(n+1) ist, und
der Neigungswinkel der Wandfläche von dem Neigungswinkel δ(n+1) bis zu dem Neigungswinkel δ(n) zwischen dem zentralen Abschnitt des (n+1)-ten Bereichs von der Mitte und dem zentralen Abschnitt des n-ten Bereichs von der Mitte allmählich zunimmt.

**14.** Reifen nach Anspruch 13,
wobei ein Verhältnis (WCn/WTn) einer Breite WCn des zentralen Abschnitts in dem n-ten Bereich von der Mitte zu einer Breite WTn in der axialen Richtung des gleichen Bereichs gleich oder höher als 0,5 oder gleich oder niedriger als 0,75 ist.

**15.** Reifen nach Anspruch 13,
wobei die Neigungswinkel δn und δ(n+1) und die Gummihärten Hn und H(n+1) den folgenden Ausdruck erfüllen:

$$1 \leq (\delta n - (\delta(n+1)) \, / \, (H(n+1) - Hn)) \leq 3.$$

**16.** Reifen nach Anspruch 10,
wobei die Laufflächen-Oberfläche einen früh ankommenden Abschnitt (154) und einen spät ankommenden Abschnitt (156) entlang der Rille aufweist,
wobei der früh ankommende Abschnitt derart gebildet ist, dass er mit einem Straßenbelag früher als der spät ankommende Abschnitt in einer Umfangsrichtung in Kontakt gelangt, wenn eine normale Rotation ausgeführt wird,
die Rille ein Paar Wandflächen (150, 152) aufweist, und der Neigungswinkel an irgendeiner der Wandflächen, die mit dem spät ankommenden Abschnitt (156) verbunden ist, ermittelt wird.

**17.** Reifen nach Anspruch 10,
wobei der Reifen an einem Vorderrad eines Motorrads aufgezogen ist.

**Revendications**

**1.** Pneumatique (2) pour une motocyclette, comprenant une bande de roulement (4) divisée en une pluralité de régions dans une direction axiale,
dans lequel la bande de roulement possède une région (20, 100) positionnée sur un centre et au moins une région (24, 102) positionnée à l'extérieur de la région dans la direction axiale,
une dureté H(n+1) du caoutchouc d'une (n+1)-ième région depuis le centre est différente d'une dureté Hn du caoutchouc d'une n-ième région depuis le centre, n étant un nombre naturel,
la bande de roulement inclut une rainure (38, 118),
la rainure possède une surface de paroi (70, 152),
une valeur minimum d'un angle d'inclinaison de la surface de paroi dans la (n+1)-ième région depuis le centre est différente de celle de l'angle d'inclinaison dans la n-ième région depuis le centre, et

une valeur minimum d'un angle d'inclinaison d'une surface de paroi dans une région ayant un caoutchouc de faible dureté est supérieure à celle d'un angle d'inclinaison d'une surface de paroi dans une région ayant un caoutchouc de forte dureté.

2. Pneumatique selon la revendication 1, dans lequel la dureté H(n+1) du caoutchouc de la (n+1)-ième région depuis le centre est inférieure à la dureté Hn du caoutchouc de la n-ième région depuis le centre, et la valeur minimum de l'angle d'inclinaison de la surface de paroi dans la (n+1)-ième région depuis le centre est supérieure à celle de l'angle d'inclinaison dans la n-ième région depuis le centre.

3. Pneumatique selon la revendication 2, dans lequel la bande de roulement inclut une rainure prévue à travers la (n+1)-ième région depuis le centre et la n-ième région depuis le centre.

4. Pneumatique selon la revendication 2, dans lequel la bande de roulement possède une rainure (38) prévue depuis la région (20) positionnée sur le centre jusqu'à une région (24) positionnée sur un côté à l'extrémité de la bande de roulement, et une dureté du caoutchouc de chacune des régions présentes depuis le centre vers l'extrémité de la bande de roulement est inférieure à celle d'une région adjacente au côté central, et une valeur minimum d'un angle d'inclinaison de la même région est supérieure à celle de la région adjacente au côté central.

5. Pneumatique selon la revendication 2, dans lequel la (n+1)-ième région depuis le centre possède une portion centrale positionnée sur un centre dans une direction axiale de la même région, et un angle d'inclinaison $\delta(n+1)$ d'une surface de paroi d'une rainure dans la portion centrale présente une valeur constante, la n-ième région depuis le centre comporte une portion centrale positionnée sur un centre dans la direction axiale de la même région, et un angle d'inclinaison $\delta(n)$ d'une surface de paroi d'une rainure dans la portion centrale possède une valeur constante, l'angle d'inclinaison $\delta(n+1)$ est supérieur à l'angle d'inclinaison $\delta(n)$, et l'angle d'inclinaison de la surface de paroi est graduellement augmenté depuis l'angle d'inclinaison $\delta(n)$ jusqu'à l'angle d'inclinaison $\delta(n+1)$ entre la portion centrale de la n-ième région depuis le centre et la portion centrale de la (n+1)-ième région depuis le centre.

6. Pneumatique selon la revendication 5, dans lequel un rapport (WCn/WTn) d'une largeur WCn de la portion centrale dans la n-ième région depuis le centre sur une largeur WTn dans la direction axiale de la même région est égal ou supérieur à 0,5 et est égal ou inférieur à 0,75.

7. Pneumatique selon la revendication 5, dans lequel les angles d'inclinaison $\delta n$ et $\delta(n+1)$ et les duretés du caoutchouc Hn et H(n+1) satisfont l'expression suivante :

$$1 \leq ((\delta(n+1) - \delta n)/(Hn - H(n+1))) \leq 3.$$

8. Pneumatique selon la revendication 2, dans lequel la surface de roulement présente une portion de contact précoce (24) et une portion de contact tardive (26) le long de la rainure (38), la portion de contact précoce est constituée pour venir en contact avec une surface d'une route plus tôt que la portion de contact tardive dans une direction circonférentielle quand on exécute une rotation normale, la rainure possède une paire de surfaces de paroi (70, 72), et l'angle d'inclinaison est déterminé sur l'une quelconque des surfaces de paroi qui est reliée à la portion de contact précoce (74).

9. Pneumatique selon la revendication 2, dans lequel le pneumatique est attaché à une roue arrière d'une motocyclette.

10. Pneumatique selon la revendication 1, dans lequel la dureté H(n+1) du caoutchouc de la (n+1)-ième région depuis le centre est supérieure à la dureté Hn du caoutchouc de la n-ième région depuis le centre, et la valeur minimum de l'angle d'inclinaison de la surface de paroi dans la n-ième région depuis le centre est supérieure à celle de l'angle d'inclinaison dans la (n+1)-ième région depuis le centre.

11. Pneumatique selon la revendication 10, dans lequel la bande de roulement inclut une rainure prévue à travers la (n+1)-ième région depuis le centre et la n-ième région depuis le centre.

**12.** Pneumatique selon la revendication 10, dans lequel la bande de roulement possède une rainure (118) prévue depuis la région (100) positionnée sur le centre jusqu'à une région (102) positionnée sur un côté à l'extrémité de la bande de roulement, et

une dureté du caoutchouc de chacune des régions présentes depuis le centre vers l'extrémité de la bande de roulement est inférieure à celle d'une région adjacente sur le côté à l'extrémité de la bande de roulement, et une valeur minimum d'un angle d'inclinaison de la même région est supérieure à celle de la région adjacente du côté à l'extrémité de la bande de roulement.

**13.** Pneumatique selon la revendication 10, dans lequel la (n+1)-ième région depuis le centre possède une portion centrale positionnée sur un centre dans une direction axiale de la même région, et un angle d'inclinaison δ(n+1) d'une surface de paroi d'une rainure dans la portion centrale présente une valeur constante,

la n-ième région depuis le centre possède une portion centrale positionnée sur un centre dans la direction axiale de la même région, et un angle d'inclinaison δ(n) d'une surface de paroi d'une rainure dans la portion centrale présente une valeur constante,

l'angle d'inclinaison δ(n) est supérieur à l'angle d'inclinaison δ(n+1), et l'angle d'inclinaison de la surface de paroi augmente graduellement depuis l'angle d'inclinaison δ(n+1) jusqu'à l'angle d'inclinaison δ(n) entre la portion centrale de la (n+1)-ième région depuis le centre et la portion centrale de la n-ième région depuis le centre.

**14.** Pneumatique selon la revendication 13, dans lequel un rapport (WCn/WTn) d'une largeur WCn de la portion centrale dans la n-ième région depuis le centre sur une largeur WTn dans la direction axiale de la même région est égal ou supérieur à 0,5 et est égal ou inférieur à 0,75.

**15.** Pneumatique selon la revendication 13, dans lequel les angles d'inclinaison δn et δ(n+1) et les duretés du caoutchouc Hn et H(n+1) satisfont l'expression suivante :

$$1 \leq ((\delta(n+1) - \delta n)/(Hn - H(n+1))) \leq 3.$$

**16.** Pneumatique selon la revendication 10, dans lequel la surface de roulement présente une portion de contact précoce (154) et une portion de contact tardive (156) le long de la rainure,

la portion de contact précoce est constituée pour venir en contact avec une surface d'une route plus tôt que la portion de contact tardive dans une direction circonférentielle quand on exécute une rotation normale, la rainure possède une paire de surfaces de paroi (150, 152), et

l'angle d'inclinaison est déterminé sur l'une quelconque des surfaces de paroi qui est reliée à la portion de contact tardive (156).

**17.** Pneumatique selon la revendication 10, dans lequel le pneumatique est attaché à une roue arrière d'une motocyclette.

Fig. 1

Fig. 2

Fig. 3

Fig. 4

Fig. 5

82

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003276404 A
- JP 2005271760 A

- JP 2008143327 A